# EUROPEAN PATENT APPLICATION

(11) **EP 1 345 421 A2**
(43) Date of publication of application: **17.09.2003**
(21) Application number: 02028844.5
(22) Date of filing: 23.12.2002
(51) Int. Cl.: H04N 5/232

(54) **Mobile digital camera control**

(30) Priority: 14.03.2002 US 364972 P
(71) Applicant: Creo IL. Ltd., 46103 Herzlia Pituah (IL)
(72) Inventor: Carmi, Ilan, 53301 Givatayim (IL); Kalinski, Dov, 45219 Hod Ha Sharon (IL); Barkan, Stanley, 30825 D.N. Hof HaCarmel (IL)
(74) Representative: Hofmann, Harald

(57) **Abstract**

A substantially pocket-sized portable control device for a digital camera, comprising: a camera interface unit, a display unit for displaying images received from the digital camera, a control unit for defining control parameters for sending to the digital camera, and a user interface, for obtaining user input for applying settings to the control unit. The device allows screen-based data input (e.g. via stylus). Conveniently the device is a cellular telephone or a personal digital assistant.

## Description

The present invention relates to the field of digital photography and more specifically to a portable digital camera control unit or a plurality of such control units for capturing, storing and displaying digital images and controlling digital cameras.

In state-of-the-art digital cameras, a display unit is affixed to the camera or found on the host computer. Use of a host computer allows a large and reliable display and very flexible controls but severely limits the degree of portability, even when a portable computer is used.

Fully portable cameras or camera backs (hereinafter collectively referred to as backs), where the display device is affixed to the back and the setting of parameters is effected by controls placed on the back, afford portability but suffer from several disadvantages.

The power supply for the back has to be larger in order to supply power for the display which is a major consumer of power. The back is thus heavier than it would otherwise be.

The display is limited to a portion of the size of the back.

The display is in a fixed location, which may not be optimal for every user.

For others to view the image on the display, the entire back, and therefore the entire camera, must be passed from hand to hand.

Alphanumeric text entry is difficult and therefore often not offered.

Complex interactive functionality is difficult to execute because of the small size and consequent limited text and diagram abilities of the display. A touch screen, for example would be difficult to use because of the small size.

Reviewing images depletes the power supply of the back.

Advances in display control technology require upgrading the entire back, and providing additional electronic power or functionality requires adding hardware to the back, thus increasing the weight and heat buildup.

If the display or control functions on a back break or are disabled the entire camera is rendered useless and has to be replaced. Since the sensor and support electronics, which are not part of the back, are a major part of the cost of the camera, this is wasteful.

In many cases, the photographer may wish to create an exact composition in a set, and then photograph the set from a back affixed to a tripod at a considerable distance from the set. Each shot has to be be examined to see if the composition is correct and then the set rearranged if necessary. In current state-of-the-art backs it is possible to connect the back to a television monitor to be viewed from afar. The application delivers a video-rate image. This is often unsatisfactory because of the distance of the monitor and the burden of moving and placing it in a viewable position.

Digital cameras may include wireless remote control which may be used to operate the device from a distance. The remote control devices do not include a display so the captured images cannot be viewed except on a distant display device.

Current backs are able to control multiple flashes by wired or wireless connection to a master flash controller. Advanced flash systems can also be programmed to control multiple flashes in time and in strength but generally require connection to a computer. Conventional back controls cannot be used to set or control more than one flash.

Fully portable backs typically include miniature removable memory devices that can be replaced when they are filled up with images. These removable devices have the disadvantage of significantly longer read and write times and much smaller storage capacity than standard storage devices such as magnetic hard disks. They are also inherently more expensive than magnetic hard disks for equivalent storage size.

State-of-the-art backs enable a burst of several images to be stored quickly to random access memory. However, when the random access memory is full, the images must be written to permanent storage to empty the random access memory. Thus the sustained rate for image capture is dictated by the speed at which images may be written to disk.

There is a constant danger that data captured to storage on the back will be corrupted before the images are downloaded and backed up. Removable storage does not lend itself to redundant writing of data on two disks because of the slow writing times.

Digital backs are often equipped with microphones to allow voice annotation to be added to images. Such a microphone adds weight to the back.

There is thus a need for a combination of display, control and storage devices that provide the advantages of a host computer without the attendent disadvantages, and at the same time overcome the disadvantages of current, state-of-the-art display and control devices affixed to backs and the disadvantages of current, state-of-the-art removable storage devices.

According to a first aspect of the present invention there is thus provided a portable control device for a digital camera, comprising:
a camera interface unit for interfacing with said digital camera,
a display unit, associated with said camera interface unit, for displaying images received from said digital camera,
a control unit, associated with said camera interface unit, for defining control parameters for sending to said digital camera, and
a user interface, associated with said control unit, for obtaining user input for applying settings to said control unit,
wherein the device is substantially pocket-sized.

The portable control device is preferably user-wearable.

The portable control device is preferably belt-mountable.

The portable control device may comprise a clip for mounting to clothing.

The portable control device may comprise a cellular telephone device.

The portable control device may alternatively be a personal digital assistant.

The portable control device may comprise a flash programming unit for defining control parameters for sending to a multiple flash control unit.

Preferably, said flash programming unit comprises functionality for taking user input based on lighting characteristics of a previously captured image to modify flash behavior for a next image to be captured.

Preferably, said camera interface unit comprises a wire input for wire connection to said camera.

Preferably, said wired connection is an RS232 connection.

Preferably, said camera interface unit comprises a wireless input for wireless connection to said camera.

Preferably, said wireless connection is any one of a group comprising an infra-red connection, a radio connection, and a laser connection.

Preferably, said wireless connection is operable to use a connection protocol from any one of a group comprising a wireless Ethernet protocol, the Bluetooth protocol, and the IEEE 802.11 wireless Ethernet protocol.

Preferably, said user interface comprises stylus input support to allow a user to input data via a stylus.

Preferably, said stylus input support comprises alphanumeric data input support.

Preferably, said user interface comprises microphone support for allowing voice input.

Preferably, an associator is provided for associating user input with a currently selected image.

The device may have multi-image display support for displaying a plurality of separately selectable images together.

Preferably, said control unit is operable to control a camera having a removable magnetic hard disk for image storage.

Preferably, said control unit is operable to control a camera having an external magnetic hard disk for image storage.

Preferably, said control unit is further operable to control a camera having a plurality of external hard disks chained together.

Preferably, said control unit is further operable to control a camera having a plurality of external hard disks chained together, to provide for redundancy storage of said images over said plurality of external hard disks.

According to a second aspect of the present invention there is provided a digital camera having a wireless interface for simultaneous connection to a plurality of substantially pocket size display devices, thereby to allow simultaneous download of images from said camera to each of said display devices.

According to a third aspect of the present invention there is provided a portable control device for a digital camera, comprising:
a camera interface unit for interfacing with said digital camera,
a display unit, associated with said camera interface unit, for displaying images received from said digital camera,
a control unit, associated with said camera interface unit, for defining control parameters for sending to said digital camera, and
a user interface, associated with said control unit, for obtaining user input for applying settings to said control unit,
wherein the device is a cellular telephone.

According to a fourth aspect of the present invention there is provided a portable control device for a digital camera, comprising:
a camera interface unit for interfacing with said digital camera,
a display unit, associated with said camera interface unit, for displaying images received from said digital camera,
a control unit, associated with said camera interface unit, for defining control parameters for sending to said digital camera, and
a user interface, associated with said control unit, for obtaining user input for applying settings to said control unit,
wherein the device is a personal digital assistant.

According to a fifth aspect of the present invention there is provided a digital camera device comprising a camera body, a lens and a display and control device, said display and control device comprising:
a camera interface unit for interfacing with said camera body;
a display unit, associated with said camera interface unit, for displaying images received from said camera body;
a control unit, associated with said camera interface unit, for defining control parameters for sending to said camera body; and
a user interface, associated with said control unit, for obtaining user input for applying settings to said control unit,
wherein said display and control device is substantially detached from said camera body and lens and wherein said display and control device is substantially pocket-sized.

For a better understanding of the invention and to show how the same may be carried into effect, reference will now be made, purely by way of example, to the accompanying drawings.
With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:
Fig. 1 is a simplified schematic diagram showing a digital camera with an external control device according to a first preferred embodiment of the present invention,
Fig. 2 is a simplified schematic diagram showing a portable camera memory device connected for data download to a host computer,
Fig. 3 is a simplified schematic diagram showing a digital camera with an external control device according to a second preferred embodiment of the present invention,
Fig. 4 is a simplified schematic diagram showing a first method of attaching an external memory device to a camera, and
Fig. 5 is a simplified schematic diagram showing a second method of attaching an external memory device to a camera.

The present embodiments provide a substantially pocket sized device for controlling a digital camera and providing a display. The device offers improvements over each of three configurations of the current art, one being to keep all control and display capabilities on board the camera, a second being to attach the camera to a host computer, and a third being to delegate control features only to a remote control device. The disadvantages of the current art devices are as discussed in the background.

The device is sized in the pocket range so that it is convenient for the user to wear or carry. Carry convenience is particularly advisable since the device has to be used in conjunction with another device, namely the camera. The term "pocket sized" is a recognized term in the product design field and *inter alia* includes such requirements as the device being able to fit a reasonably sized pocket and the device being able to be held in one hand without inordinate difficulty.

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

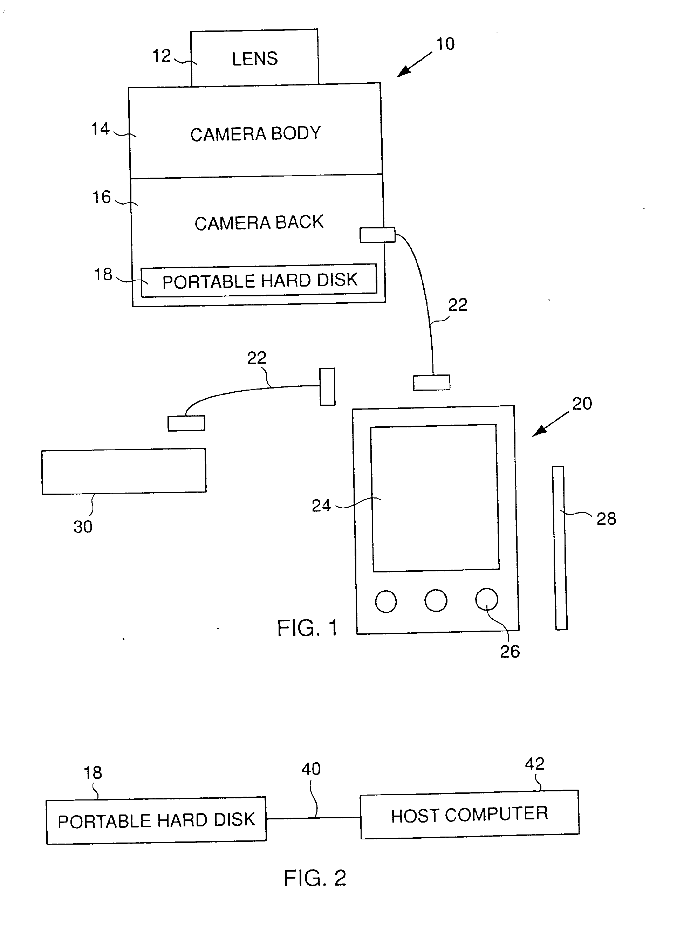

Reference is now made to Fig. 1, which is a block diagram of a first preferred embodiment of a digital camera including a camera back with an external monitor and control unit operative in accordance with the present invention. Camera 10 includes a lens 12, a camera body 14 and a digital camera back 16. Slotted into the camera back 16 is a standard removable magnetic disk 18 which is preferably connected by a fast communication connector such as a cable transporting IEEE 1394 (www.1394ta.org) or USB 2.0 (www.usb.org) communications protocol. The magnetic hard disk allows for rapid storage of image data from the camera. The back preferably includes multiple flash connectors. Display and control device 20 is detached from the back. The display and control device 20 may be connected to the back by a cable 22 that transports a communications protocol such as the serial RS232 protocol. The display and control device 20 is intended to be worn on the body of the photographer, in a pocket or clipped to a belt or clothing or in some like manner.

Display and control device 20 preferably includes a screen 24 for display of images. A microphone 26 is provided to allow voice clips to be recorded with images, and a stylus 28 can preferably be used to point to regions on the screen. The stylus may be useful for such varied tasks as selecting bright or dark regions for lighting control, or it may be used in conjunction with a virtual keyboard for allowing alphanumeric input.

A multiple flash control unit 30 may be provided as an optional extra, either wired to the control unit 20 as shown or directly to the camera back, to provide the camera with the ability to control multiple flashes. Use of the multiple flash control unit, in association with the monitor and control device 20, will be discussed in greater detail below.

Reference is now made to Fig. 2, which is a simplified diagram showing the magnetic hard disk 18 being connected via a fast communication link 40, for example USB 2.0 or FireWire, to a host computer 42. Such a connection allows for rapid downloading of image data to the host computer. As will be discussed in greater detail below, as well as the internally mounted hard disk discussed above, an external hard disk may be used with the camera.

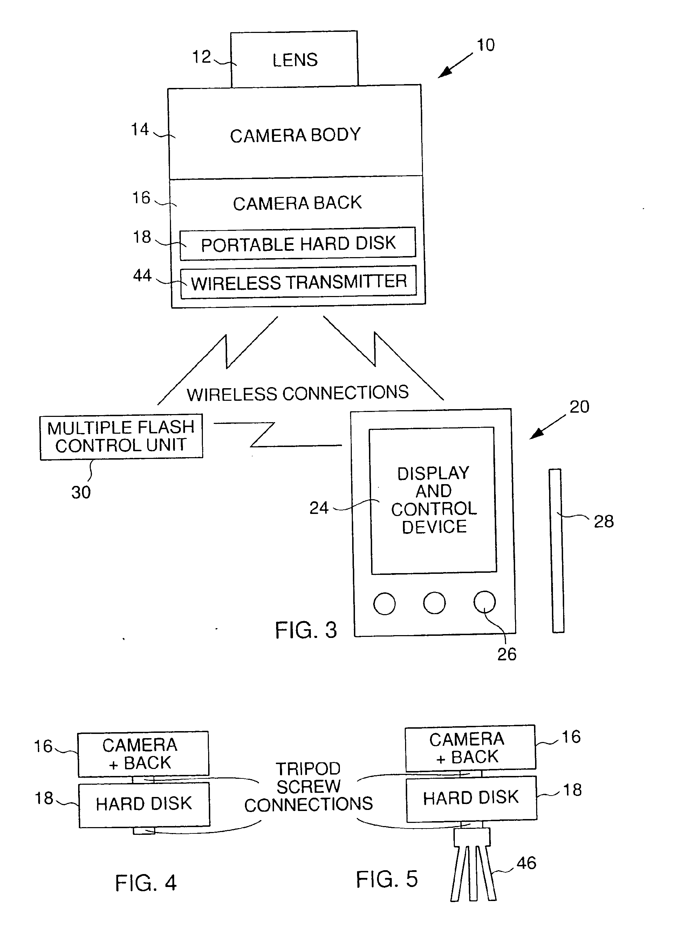

Reference is now made to Fig. 3, which is a simplified block diagram showing a second preferred embodiment of a digital camera or camera back with external control. Parts that are the same as those in previous figures are given the same reference numerals and are not referred to again except as necessary for an understanding of the present embodiment. As before, camera 10 comprises a lens 12, a camera body 14, and a camera back 16, and the camera back 16 includes a standard magnetic disk 18 connected to the camera via a fast communication link such as a cable transporting IEEE 1394 (www.1394ta.org) or the USB 2.0 (www.usb.org) communications protocol. As before, display and control device 20 is detached from the back 16. Again, the display and control device 20 contains a separate module 30 having multiple flash connectors. A wireless transmitter unit 44 is located in the camera back, and the display and control device and the multiple-flash module may be connected by wireless transmission that carries a communication protocol such as the Bluetooth communications protocol (http://www.bluetooth.com) or a wireless ethernet protocol such as IEEE 802.11 (http://www.wirelessethernet.org). Preferably, the multiple flash module 30 is wirelessly connected both to the display and control module 20 and directly to the camera back 16. As alternatives, wireless communication may be by any other radio based protocol, or via laser or other light based system or via microwaves or infra-red.

In a further preferred embodiment, a combination of wireless and wired connections are implemented, including for example a wired connection to the multiple-flash module 30 and a wireless connection to the detached display and control device 20.

Figure 4 is a simplified schematic diagram for showing a second way of attaching a portable magnetic disk to a camera back. In previous figures, the portable hard disk was a removable disk shown to be inserted into a slot in the camera back. In Fig, 4 the portable hard disk is an external hard disk and is shown to be attached to the base of the camera back using a standard tripod screw connection of the kind which is provided as standard on all cameras. In Fig. 5 the magnetic disk is connected in the same way to the camera back and then the base of the hard disk is in turn connected via another tripod screw connection to tripod 46.

To better understand the nature and advantages of the above embodiments, the following particular workflows are considered:

### Composing and taking a still-life camera shot:

The typical sequence of events for taking a digital shot of a composed still life set typically uses a tripod mounted camera and proceeds as follows:
- A video-rate shooting mode is initiated,
- The set is composed using the video-rate display,
- The signal to shoot is initiated,
- The shutter is opened,
- The flash is fired,
- The shutter is closed,
- The data from the sensor is read out to temporary random access memory storage,
- The data is processed prior to permanent storage,
- An image of the shot is displayed,
- The shot is optionally verified or discarded, and
- The data, unless discarded, is written to the permanent storage device.

The properties of the preferred embodiments are different from those of state-of-the-art digital camera methods and devices and therefore various aspects of the still life shot procedure are modified, as described below.

The photographer carries the display and control device 20 to the set, where it is wired to the camera in the embodiment of Fig. 1 or just located in proximity in the wireless embodiment of Fig. 3. The video mode is set and initiated from the set by the display and control device 20, which operates as a remote control device for the camera. The resulting video-rate image is viewed on the device display 24 at the set. The photographer can arrange the set while simultaneously getting a real-time view of the captured result from close up.

If the display and control device is wirelessly connected as depicted in Figure 3, multiple display and control devices 20 may be updated and viewed simultaneously by different people participating in the photographic session. The distance to the participants is limited only by the wireless communication range. Alternatively, the video image may be transmitted to a receiving server, such as a computer equipped with a suitable wireless receiver. From the computer, the images may be relayed by standard communications means such as TCP/IP (internet) protocol to other remote locations.

The display and control device may be used to zoom in on particular parts of the composition. If a motor is attached to the camera lens 12, the control device 20 may be used to alter the focus and objects may be physically moved into focus as desired. If the camera is a view camera enabling remotely controlled motorized tilt and swing, the control device may be used to adjust the tilt and swing as desired. The preferred embodiments enable the monitor and control device 20 to be placed wherever the user desires: in a shirt pocket, on the set, hung on a flash tripod and so on.

In some cases, the video image is not sufficient to judge if the image is good. In this case a still shot may be initiated from the display and control device and the result viewed while still remaining by the set. For convenience the shoot command and other commands may be voice activated, using microphone 26.

The resulting shot may be closely examined in 1:1 or greater resolution. Shots of this kind are often stored and later deleted since they are not the final desired shot. To save storage space, using the present embodiments, these shots may be immediately deleted since the control device is able to instruct the back to delete the image from memory and from permanent storage. Such an instruction may be provided under user control or automatically.

If the display and control device 20 is wirelessly connected, multiple display and control devices may be updated and viewed simultaneously by different people participating in the photographic session or at remote locations, as indicated above with respect to the video-rate images.

The display and control device 20 may be used to set a time delay on the shot so that, for example, the photographer has time to enter the frame before the shot is taken.

The permanent storage available to the back differs from state-of-the-art devices in that, as discussed above in respect of Figs. 2, 4 and 5, it comprises a standard external or removable magnetic disk which can in turn be attached to a typical computer as a peripheral device on a standard communications bus such as a FireWire or USB 2.0 bus. The attachment to the camera or camera back may be enabled by implementing the digital camera or camera back as the master of such a bus. Bus mastery by the camera back affords several advantages. In the removable version, the magnetic disk may be inserted into the back, optionally with a hatch for removal and replacement. Alternatively, in the external version, it may be attached in a separate housing mechanically interfacing on one side with the camera body by means of the tripod screw hole and interfacing on the other side with the tripod by means of the tripod screw, as explained above with respect to Figure 4. Disks may be chained in this manner so that more than one disk is available for storage. Chaining disks allows a redundancy function to be implemented, wherein data is always written at least twice to parallel disk storage units.

The redundancy function comprises writing all or part of the data to two disks. This can be done by immediately storing all data that are written to one disk on a second disk. Alternatively, data may be copied from the first disk to the second disk in idle time when the camera is not active.

To access the images from a computer, the magnetic disk 18 is simply attached to the standard peripheral connector of the computer, as indicated in Fig. 2. No special removable storage slot is required. This may be done by attaching the back itself or by removing the disk from the back and attaching the disk, the latter being the case depicted in Figure 2. Use of a standard peripheral connector reduces the cost of the host computer system, which would otherwise require a removable-storage housing module.

Use of removable or external hard disk 18 allows an increase in the number of shots that can be stored on a single device from a current maximum of 1 gigabyte of storage (e.g. IBM micro disk) to 5 or more gigabytes of storage using, for example, the Firewire Smart disk. Such a technological gap is likely to be maintained although of course the absolute numbers in bytes should increase in both cases. Large storage is particularly advantageous for professional photography since high image resolution is demanded, and the image size of the high resolution images is considerable. Furthemore, professional photographers tend to take large numbers of photographs from which just a small number are selected for use.

Current state-of-the-art internally mounted removable storage is inserted in a standard interface socket. The socket operates using given protocols, and the writing and reading speed tends to be defined by those protocols. When faster removable storage is developed it therefore requires upgrading of the standard interface socket as provided in the camera back, if advantage is to be taken of the new higher speed. In the case of a standard external disk however, the corresponding protocols are designed to be of more general applicability and in fact the data transfer speed limitations are invariably faster than the speed at which data can be written to disk. Thus, as faster disks are developed, the back storage may be upgraded to a faster version by simply inserting a faster disk, and there is no need to upgrade the socket.

### Composing and taking a hand-held camera shot.

The typical sequence of events for composing and taking a hand held digital shot is as follows:
- The camera is lifted to the eye and the shot is composed,
- A signal to shoot is initiated,
- The shutter is opened,
- The flash is fired (if required),
- The shutter is closed,
- The data from the sensor is read out to temporary random access memory storage,
- The data is processed prior to permanent storage, and
- The data is written to the permanent storage device,

The properties of the present embodiments are different from those of state-of-the-art digital camera methods and devices in several aspects of this sequence of events, as described below.

The display and control device is separate from the camera or camera back. The camera can thus be made correspondingly lighter, which is advantageous for hand-held shots. In addition, use of an external hard disk considerably increases the writing speed to permanent storage. Thus the sustained shooting rate is increased over conventional digital cameras and camera backs. A higher shooting rate is especially useful when shooting live and/or moving subjects.

The power supply for the back is smaller since it does not have to supply power for the display. The camera can either be made without a display or the display can be switched off, either way realizing the saving of power. Such power saving increases the time between recharges or between battery replacements, which is useful when shooting in untethered mode in which the power supply for the back is a battery.

### Setting the capture parameters

The typical sequence of events for setting capture parameters in a digital camera is as follows:
- Activate the display and control device on the camera,
- Using a joystick and other button controls, select the desired settings for capture on the basis of menus, interaction with an image or diagram on the display or alphanumeric entry,
- Save the new setting,
- Deactivate the display and control device (to save power), and

The properties of the present embodiments differ from those of state-of-the-art digital camera methods and devices in several aspects of this sequence of events, as described below.

A standard electronic device known as a Personal Digital Assistant (PDA), such as the iPaq sold by Compaq can be used as the display and control device. An alternative option for a display and control device is a cellular telephone equipped with a pen-based touch screen, a suitable example being the P800 available from Ericsson Mobile Communications Company, which uses the Symbian (http://www.symbian.com) Operating System with UIQ user interface. Both PDAs and cellular telephones have the advantage of being upgradeable without needing to make any changes to the camera back itself, as for example when a better color display is developed. The use of the devices as detailed above enables immediate use of a range of additional applications and functions, such as database management software, connectivity to a cellular telephone network and so on, that cannot be practically implemented on a digital camera or camera back without increasing its size or weight.

Alphanumeric data such as numbers and desired file or folder names may be entered, using the stylus and the virtual keyboard provided by the device.

The display provided by a PDA or by the kind of cellular telephone being discussed is typically significantly larger than that provided with the standard digital camera and is not limited by the size of the back, yet it remains pocket sized. It is easier to read than a typical digital camera or digital camera back display and allows use of larger graphic icons and diagrams for easy comprehension.

Interactive capture settings functions such as selecting a point for zooming in; selecting a point for computing a neutral balance; defining a crop selection for an image, defining a sequence of flashes to be fired and so on are easily implemented via use of the stylus, which serves as a pointing and dragging device on the screen. As discussed above, the screen may be implemented as a touch screen. Such functionality becomes practical because of the large display. It is not available on state-of-the art digital cameras or camera backs that are by intention small and inherently unsuitable for touch screen displays. If such a pointing device and a large, interactive graphical user interface were to be provided it would require enlarging and adding weight to the back.

Prior to use of the camera or camera back, the personal digital assistant (PDA) may be updated with any desired capture parameters. Such updating may be conveniently carried out from a host computer using the electronic PDA cradle, a common accessory attached to the host computer used for synchronizing data held in parallel on the host computer and in the PDA.

### Setting up controlled multi-flash lighting

Multiple flashes may be controlled to fire in various combinations with various delays and varying flash strength using a state-of-the-art digital flash control unit such as the Vision Control Light box 48/105
(http://www.vision-control.com). However, conventionally, a computer is required to program the unit, using an RS232 serial connection or by wireless transmitter communication. As discussed in respect of Figs. 1 and 3 above, the present embodiments support direct programming of the flash unit from the monitor and control device 20.

The typical sequence of events in setting up and controlling multiple flashes includes the following stages:
- A collection of flash units is connected to a multi-flash lighting system capable of firing the flashes in rapid succession in programmed combinations,
- A wire or wireless connection is established between the camera or camera back and the master flash controller,
- The master flash controller is programmed using the display and control device to fire a sequence of flashes in a specific sequence with specific flash intensities,
- The shot is initiated and a firing pulse is sent to the master flash controller,
- The master flash controller controls firing of the sequence of flashes according to the program received from the display and control device,
- The image is captured and viewed by the user on the display and control device,
- The user examines the image and initiates an automatic exposure setting process such as described in Provisional US Patent Application No. 60/333,146 the entire contents of which are incorporated herein by reference, and
- The required change in flash intensity is automatically computed and revised parameters are digitally communicated to the master flash unit.

The properties of the present embodiments are different from those of state-of-the-art digital camera methods and devices in several aspects of this sequence of events, as described below.

No computer is required to set the flash parameters. Rather the full display and alphanumeric functionality, which is available to the display and control device is generally sufficient to enable the display and control device alone to be all that is required to set the flash parameters.

In a further preferred embodiment of the present invention, a closed loop system is constructed between the camera 10, the flash unit 30 and the monitor and control unit 20 such that image analysis can be used to compute desired flash parameters that can be directly communicated to the flash control unit.

### Organizing, reviewing, marking and annotating images

In many cases the photographer wishes to review images for the purposes of data-related activities.

Typical sequences of events are as follows:

Prior to shooting:
- Named folders are created for storing the captured images, and
- A file-naming prefix/suffix is entered.

After shooting:
- Images are viewed in a multi-image mode,
- Unwanted images are marked for deletion and desirable images are marked for priority attention,
- Selected images are renamed and/or moved to desired folders,
- Selected images are annotated with text and/or voice annotation, and
- Where necessary to identify customers, order information and the like may be input.

The properties of the present embodiments differ from those of state-of-the-art digital camera methods and devices in several aspects, to effect the above sequence of events as described below.

The display and control devices of the preferred embodiments enable easy alphanumeric entry of customized folder names and the direct use of file-naming prefixes and suffixes, due to the existence of a stylus and virtual keyboard, for example. Viewing an image requires a minimum image size, otherwise no useful information is imparted to the viewer. For a given minimum size, the proposed configuration permits more images to be displayed simultaneously since the display size is not limited to a portion of the size of the back. Images may be reached by direct access via the simultaneous display,using the stylus for selection instead of the scrolling selection rectangle typically found in current digital cameras and camera backs. Once obtained, image file renaming or marking is enabled through use of alphanumeric data entry.

The relatively large display size enables prospective clients, for example persons in the images, to better examine the images and decide if they want to order any prints. Use of a standard portable device such as a PDA enables independent applications to be loaded such as database management for images, wherein orders may be entered.

If more than one display and control device was activated during image capture, in particular in the Fig. 3 embodiment wherein the communications comprise wireless communication, all the devices may be expected to have their own updated copies of the captured images. This facilitates simultaneous review of images by several persons. Additionally, the viewing device is not the camera back itself, thus protecting the back from accidental harm. Additionally, the back can be turned off when reviewing images, thus saving the back power supply, which is the critical resource. Alternatively, the camera may continue to be used simultaneously to take more shots, so that one person may take photographs and other people may review.

In one preferred embodiment, the display and control device 20 is a standard device, such as the PDA or cellular telephone discussed above. In such a case, data management activities may be extended and upgraded by software additions to the device, and not requiring any changes to the back or any communication between the back and a host computer. Moreover, functions such as voice recording and recognition can be easily upgraded by software or by replacing the display and control device without having to replace the camera back. Replacing the display and control device generally amounts to replacing the camera or camera back and it is pointed out that it is considerably cheaper to replace a control device than it is to replace the entire photographic device.

Additionally, ordinary wear and tear of the display and control device leads only to a need to replace the display and control device and not the entire camera or camera back.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

It will be appreciated by persons skilled in the art that the present invention is not limited to what has been particularly shown and described hereinabove. Rather the scope of the present invention is defined by the appended claims and includes both combinations and subcombinations of the various features described hereinabove as well as variations and modifications thereof which would occur to persons skilled in the art upon reading the foregoing description.

## Claims

1. A portable control device for a digital camera, comprising:
a camera interface unit for interfacing with said digital camera,
a display unit, associated with said camera interface unit, for displaying images received from said digital camera,
a control unit, associated with said camera interface unit, for defining control parameters for sending to said digital camera, and
a user interface, associated with said control unit, for obtaining user input for applying settings to said control unit,
wherein the device is substantially pocket-sized.

2. The device of claim 1, further being user-wearable.

3. The device of claim 2, further being belt-mountable.

4. The device of claim 2, further comprising a clip for mounting to clothing.

5. The device of claim 1, being a cellular telephone device.

6. The device of claim 1, being a personal digital assistant.

7. The device of claim 1, further comprising a flash programming unit for defining control parameters for sending to a multiple flash control unit.

8. The device of claim 7, wherein said flash programming unit comprises functionality for taking user input based on lighting characteristics of a previously captured image to modify flash behavior for a next image to be captured.

9. The device of any preceding claim, wherein said camera interface unit comprises a wire input for wire connection to said camera.

10. The device of claim 9, wherein said wired connection is an RS232 connection.

11. The device of any one of claims 1 to 8, wherein said camera interface unit comprises a wireless input for wireless connection to said camera.

12. The device of claim 11, wherein said wireless connection is any one of a group comprising an infra-red connection, a radio connection, and a laser connection.

13. The device of claim 11, wherein said wireless connection is operable to use a connection protocol from any one of a group comprising a wireless Ethernet protocol, the Bluetooth protocol, and the IEEE 802.11 wireless Ethernet protocol.

14. The device of any preceding claim, wherein said user interface comprises stylus input support to allow a user to input data via a stylus.

15. The device of claim 14, wherein said stylus input support comprises alphanumeric data input support.

16. The device of any preceding claim, wherein said user interface comprises microphone support for allowing voice input.

17. The device of any preceding claim, further comprising an associator for associating user input with a currently selected image.

18. The device of claim 17, further having multi-image display support for displaying a plurality of separately selectable images together.

19. The device of any preceding claim, wherein said control unit is operable to control a camera having a removable magnetic hard disk for image storage.

20. The device of any preceding claim, wherein said control unit is operable to control a camera having an external magnetic hard disk for image storage.

21. The device of claim 20, wherein said control unit is further operable to control a camera having a plurality of external hard disks chained together.

22. The device of claim 20, wherein said control unit is further operable to control a camera having a plurality of external hard disks chained together, to provide for redundancy storage of said images over said plurality of external hard disks.

23. A digital camera having a wireless interface for simultaneous connection to a plurality of substantially pocket size display devices, thereby to allow simultaneous download of images from said camera to each of said display devices.

24. A portable control device for a digital camera, comprising:
a camera interface unit for interfacing with said digital camera,
a display unit, associated with said camera interface unit, for displaying images received from said digital camera,
a control unit, associated with said camera interface unit, for defining control parameters for sending to said digital camera, and
a user interface, associated with said control unit, for obtaining user input for applying settings to said control unit,
wherein the device is a cellular telephone.

25. A portable control device for a digital camera, comprising:
a camera interface unit for interfacing with said digital camera,
a display unit, associated with said camera interface unit, for displaying images received from said digital camera,
a control unit, associated with said camera interface unit, for defining control parameters for sending to said digital camera, and
a user interface, associated with said control unit, for obtaining user input for applying settings to said control unit,
wherein the device is a personal digital assistant.

26. A digital camera device comprising a camera body, a lens and a display and control device, said display and control device comprising:
a camera interface unit for interfacing with said camera body;
a display unit, associated with said camera interface unit, for displaying images received from said camera body;
a control unit, associated with said camera interface unit, for defining control parameters for sending to said camera body; and
a user interface, associated with said control unit, for obtaining user input for applying settings to said control unit,
wherein said display and control device is substantially detached from said camera body and lens and wherein said display and control device is substantially pocket-sized.
